# EUROPEAN PATENT APPLICATION

(11) **EP 2 154 003 A2**
(43) Date of publication of application: **17.02.2010**
(21) Application number: 09167106.5
(22) Date of filing: 03.08.2009
(51) Int. Cl.: B44C 1/22

(54) **Method for making patterns on housings**

(30) Priority: 14.08.2008 CN 200810303787
(71) Applicant: Shenzhen Futaihong Precision Industry Co., Ltd., Shenzhen City, Guangdong Province 518109 (CN); FIH (Hong Kong) Limited, Cheng Sha Wan Kowloon Hong Kong (CN)
(72) Inventor: Zhang, Bing, 518109 Shenzhen City (CN); Zeng, Yi-Ping, 518109 Shenzhen City (CN)
(74) Representative: Craven, Ian

(57) **Abstract**

A method for making a pattern on a housing, comprising: providing a substrate or a substrate formed with a paint coating; using a metal film to mask a portion of the substrate or the paint coating; providing a laser to irradiate a portion of the metal film according to a predetermined pattern to form a pattern with metallic appearance on the substrate or the paint coating; and removing the metal film from the substrate or the paint coating.

## Description

The present disclosure relates to a method for making patterns on housings, and especially to a method for making a pattern with a metallic appearance on a housing.

Housings of portable electronic devices are commonly made of plastic. These plastic housings may be coated with paint or ink to provide a decorative appearance. A symbolic pattern is usually formed over the paint or ink coating by printing or gilding. The pattern formed by gilding can present a metallic appearance and gloss which is more attractive.

A common process for making a pattern by gilding is to use a metal film to mask the surface of a housing first, and then utilizing a gilding machine with a predetermined pattern to press on the metal film using heat and pressure to transfer the pattern onto the housing. For each different pattern to be applied on a housing by the gilding method, a different gilding machine must be employed, which is costly and time consuming.

Therefore, there is room for improvement within the art.

### BRIEF DESCRIPTION OF THE DRAWINGS

Many aspects of the method for making a pattern on a housing can be better understood with reference to the following drawings. The components in the drawing are not necessarily drawn to scale, the emphasis instead being placed upon clearly illustrating the principles of the method. Moreover, in the drawing like reference numerals designate corresponding parts throughout the several views.

FIG. 1 is a schematic view of an exemplary embodiment of a method for making a pattern on a housing.

FIG. 2 is a flow chart of an exemplary embodiment of a method for making pattern on housing.

### DETAILED DESCRIPTION OF THE DISCLOSURE

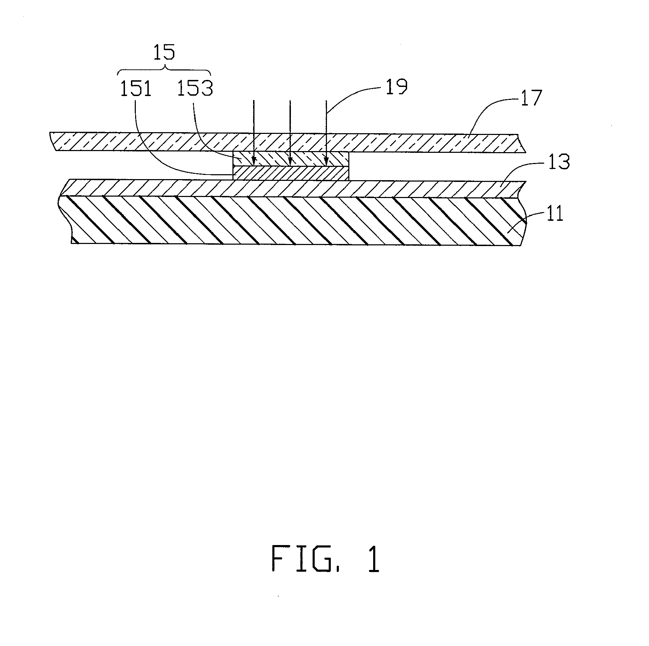

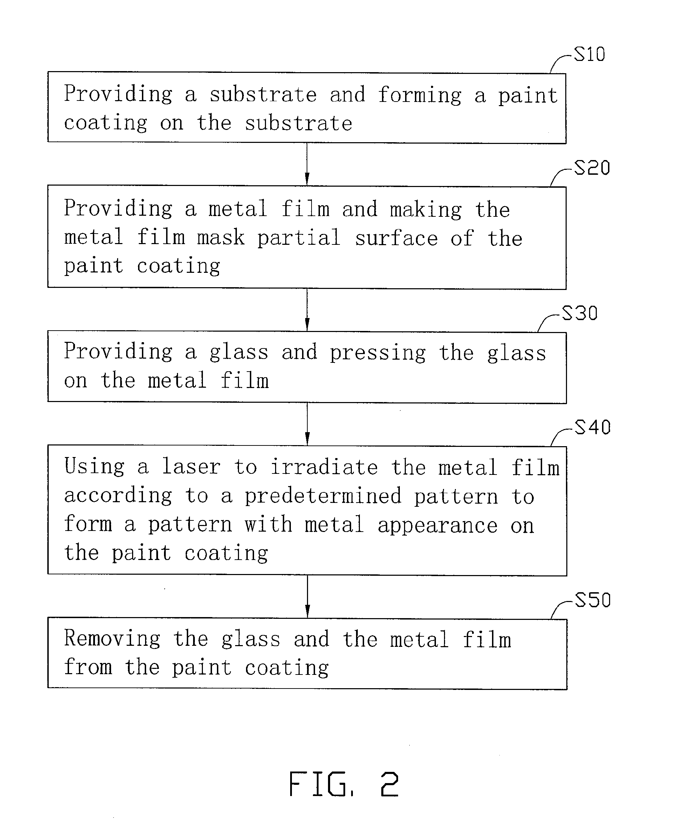

Referring to FIG. 1 and FIG. 2, in an exemplary embodiment, a method for making a pattern on a housing may include the step S10 to step S50.

In step S10, a substrate 11 is provided. The substrate 11 may be made of opaque or transparent plastic, or alternatively, the substrate 11 may be made of metal. A paint coating 13 may be applied on the substrate 11.

In step S20, a metal film 15 is provided and used to mask a portionof the paint coating 13. The metal film 15 may include a metal coating 1 51 and a plastic coating 1 53. The plastic coating 1 53 may be a transparent plastic film, e.g., polyethylene terephthalate (PET) film. In this embodiment, the metal coating 151 of the metal film 15 directly contacts the surface of the paint coating 13.

In step S30, a transparent glass 17 is provided and tightly pressed onto the plastic coating 1 53 of the metal film 15.

In step S40, a laser 19 is provided and used to irradiate the metal film 1 5 according to a predetermined pattern. Because the glass 17 and the plastic coating 153 are transparent, the laser 19 can transmit through the glass 17 and the plastic coating 153 and focus on the metal coating 151 to make the metal coating 151 hot at the regions the laser beam 19 is focused on. The heated regions of the metal coating 151 then heats and bonds with the paint coating 13. Irradiation by the laser 19 causes the regions of the metal coating 151 focused on to split or separate from the regions not heated by the laser 19.

In step 50, the glass 17 and the metal film 15 are removed from the paint coating 13. The region of the metal coating 151 of the metal film 15 not irradiated by the laser 19 can be removed from the paint coating 1 3. The parts of the metal coating 1 51 that bond with the paint coating 13 remain on the paint coating 13 to form a pattern with metallic appearance.

It should be understood, the pattern can also be formed on the substrate 11.

The method for making a pattern on a housing utilizes a laser to irradiate the metal film to form the pattern with metallic appearance, which lowers costs by eliminating the need for different gilding machines.

The method for making a pattern on a housing disclosed in the exemplary disclosure may be suitable for the housing of a mobile phone, a game player, or a camera for example. The housing may also be a container or a cover of a container.

It should be understood, however, that even though numerous characteristics and advantages of the present embodiments have been set forth in the foregoing description, together with details of functions of the embodiments, the disclosure is illustrative only, and changes may be made in detail within the principles of the disclosure to the full extent indicated by the broad general meaning of the terms in which the appended claims are expressed.

## Claims

1. A method for making a pattern on a housing, comprising:
providing a substrate;
forming a paint coating on one surface of the substrate;
using a metal film to mask a portion of the paint coating;
using a laser to irradiate a portion of the metal film according to a predetermined pattern to form a pattern with metallic appearance on the paint coating; and
removing the metal film from the paint coating.

2. The method as claimed in claim 1, wherein the substrate is made of plastic or metal.

3. The method as claimed in claim 1, wherein the metal film includes a metal coating and a plastic coating bonded with the metal coating, the plastic coating is a transparent plastic film.

4. The method as claimed in claim 3, wherein the step of masking the paint coating is implemented by making the metal coating contact with a partial surface of the paint coating.

5. A method for making a pattern on a housing, comprising:
providing a substrate;
using a metal film to mask a portion of the substrate;
using a laser to irradiate a portion of the metal film according to a predetermined pattern to form a pattern with metallic appearance on the substrate; and
removing the metal film from the substrate.

6. The method as claimed in claim 5, wherein the metal film includes a metal coating and a plastic coating bonded with the metal coating, the plastic coating is a transparent plastic film.

7. The method as claimed in claim 6, wherein the step of masking the substrate is implemented by making the metal coating contact with partial surface of the substrate.
